# EUROPEAN PATENT APPLICATION

(11) **EP 1 731 406 A2**
(43) Date of publication of application: **13.12.2006**
(21) Application number: 06011862.7
(22) Date of filing: 08.06.2006
(51) Int. Cl.: B62D 5/04

(54) **Electric power steering unit and controller thereof**

(30) Priority: 08.06.2005 JP 2005168748
(71) Applicant: NSK LTD., Shinagawa-ku, Tokyo 141-8560 (JP)
(72) Inventor: Sakata, Takeshi, Maebashi-shi, Gunma (JP); Kobayashi, Nobuyuki, Maebashi-shi, Gunma (JP); Koiwai, Hisayoshi, Maebashi-shi, Gunma (JP)
(74) Representative: Grünecker, Kinkeldey, Stockmair & Schwanhäusser Anwaltssozietät

(57) **Abstract**

An electric power steering unit includes: a controller 4 for controlling a drive of an electric motor 16; and a terminal base 4B, which is provided in the controller 4, which constitutes a signal terminal of the controller 4, wherein the terminal base 4B fastens a terminal by means of fastening with a bolt. Terminals of pieces of harness 16A to 16C extending from the electric motor 16 are fastened to output terminals 23A to 23C on the terminal base 4B by means of fastening bolts. The electric power steering unit more preferably includes: a contact resistance detection member (35, 36, 37) for detecting a contact resistance between each output terminal 23A to 23C and each terminal TN of the harness 16A to 16C; and an electric current control member (21, 22) for controlling a drive current supplied to the electric motor 16 with detection information obtained by this detection member.

## Description

### BACKGROUND OF THE INVENTION

The present invention relates to an electric power steering unit and a controller thereof. More specifically, the present invention relates to improvements in the structure of connecting a harness of an electric motor, which is a drive source of an electric power steering unit, to a controller.

Recently, many of vehicles are equipped with an electric power steering (EPC) unit. In general, this electric power steering unit includes: a torque sensor for detecting a steering torque given to a steered wheel; and an electric motor for assisting a driver when the driver conducts steering operation. This electric power steering unit drives the electric motor according to a steering torque detected by the torque sensor. A rotational output of the electric motor becomes an assisting steering torque. A rotational speed of this rotational output of the electric motor is reduced by a gear mechanism and transmitted to an output shaft of a steering mechanism. Due to the foregoing, while a steering force given to the steering wheel is being assisted, a steering operation is conducted on the vehicle.

In order to control this electric power steering unit, a controller is mounted on a vehicle. This controller includes an electric control circuit (a circuit such as CPU, referred to as ECU) which receives a steering torque signal sent from the torque sensor and also receives signals sent from various sensors and processes these signals with a predetermined algorithm. According to the result of processing conducted by the electric control circuit, a drive current supplied from an electric power source to the electric motor is controlled.

In this case, for example, as shown in Patent Document 1, the electric control circuit and the electric motor are connected to each other. To be specific, this Patent Document 1 shows an example of the electric power steering circuit unit. As shown in Fig. 1 of Patent Document 1, in the circuit unit (ECU), which is made up of a conductive plate, on which wiring is provided, a connector is arranged, and the wiring (harness) of the electric circuit and the wiring (harness) of the electric motor are connected to each other via this connector. Due to this structure, it becomes possible to increase an intensity of the electric current capable of being supplied to the electric motor.

Patent Document 1: JP-A-2003-26010

However, in the case where the harness of the electric motor is connected to the connector of the electric control circuit (ECU) so as to increase an intensity of the electric current, the following problems may be encountered. When a connection of the connector is in an incomplete state such as a contact failure, the contact resistance is increased and the heat deterioration is accelerated. This causes a reduction in the durability of the connector. Further, the reliability is deteriorated. Especially in the case of a heavy vehicle, it is necessary to increase an intensity of the drive current and further it is necessary to use a higher voltage. Accordingly, a special importance is attached to the above problems of heat deterioration.

In the case of the above connection structure, an engagement direction (a connecting direction) at the time of connecting the terminal of the harness of the electric motor to the connector is limited to an inserting direction of inserting the terminal into the connector. Therefore, an arranging direction and an arranging position of the electric motor of the electric power steering unit in the vehicle are restricted. Accordingly, a degree of freedom of designing the layout of the electric power steering unit is low, and it takes time to conduct designing the electric power steering unit. Further, a layout of another device becomes too tight when it is designed.

### SUMMARY OF THE INVENTION

The present invention has been accomplished to solve the above problems of the prior art. An object of the present invention is to provide an electric power steering unit characterized in that: a contact resistance at a connecting portion between a lead wire of an electric motor and an electric control circuit (ECU) is positively controlled so that a high intensity of electric current can be made to flow and a high voltage can be impressed; and a degree of freedom of designing a layout of the electric power steering unit in a vehicle can be enhanced.

In order to accomplish the above object, the present invention provides an electric power steering unit including: an electric motor for driving an electric power steering unit of a vehicle; a controller for controlling a drive of the electric motor; and a bolt-fastening type connecting section arranged in the controller, constituting a signal terminal of the controller, wherein a terminal of a harness extending from the electric motor is fastened to the connecting section by means of bolt-fastening.

In order to accomplish the above object, a controller used for an electric power steering unit is provided which controls a drive of an electric motor to be used as a drive source of driving an electric power steering unit of a vehicle. This controller includes a terminal base provided integrally with the controller, having a connecting section of a bolt-fastening structure constituting a signal terminal of the controller, wherein a terminal of the harness extending from the electric motor is fastened to the connecting section by means of bolt-fastening.

According to the electric power steering unit and the controller thereof of the present invention, it is possible to positively control a contact resistance at a connecting portion of the lead wire of the electric motor to the controller so that a high intensity of electric current can made to flow in the electric power steering unit and a high voltage can be impressed upon the electric power steering unit. Further, it is possible to enhance a degree of freedom of designing a layout of the electric power steering unit in a vehicle.

### BRIEF DESCRIPTION OF THE DRAWINGS

Fig. 1 is a view showing an outline of the structure of the electric power steering unit of an embodiment of the present invention.
Fig. 2 is a block diagram showing an outline of the structure of the controller employed in an embodiment.
Fig. 3 is a side view showing a connection between a controller and a harness of an electric motor.
Fig. 4 is a view for explaining a harness terminal.
Fig. 5 is a view for explaining a relation between a hole position of a terminal base and a hole position of a harness.
Fig. 6 is a view for explaining a method of attaching a harness to a terminal base with fittings.
Figs. 7A and 7B are views for explaining a generation of a positional shift between a terminal base hole and a harness terminal hole.
Fig. 8 is a plan view of a terminal base in the case where a positioning guide is provided on the terminal base.
Fig. 9 is a plan view of a terminal base in the case where a positioning guide is provided on the terminal base.
Fig. 10 is a plan view of a terminal base in the case where a positioning guide is provided on the terminal base.
Fig. 11 is a plan view of a terminal base in the case where a positioning guide is provided on the terminal base.
Fig. 12 is a block diagram showing an outline of a structure of a controller employed in a variation.

### DETAILED DESCRIPTION OF THE PREFERRED EMBODIMENTS

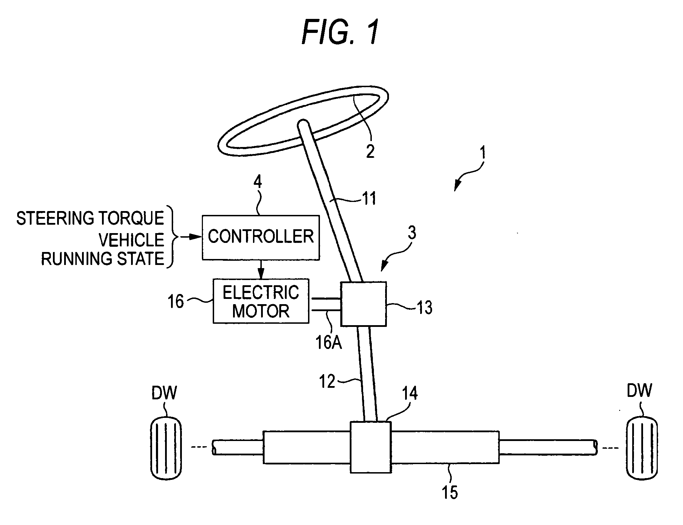

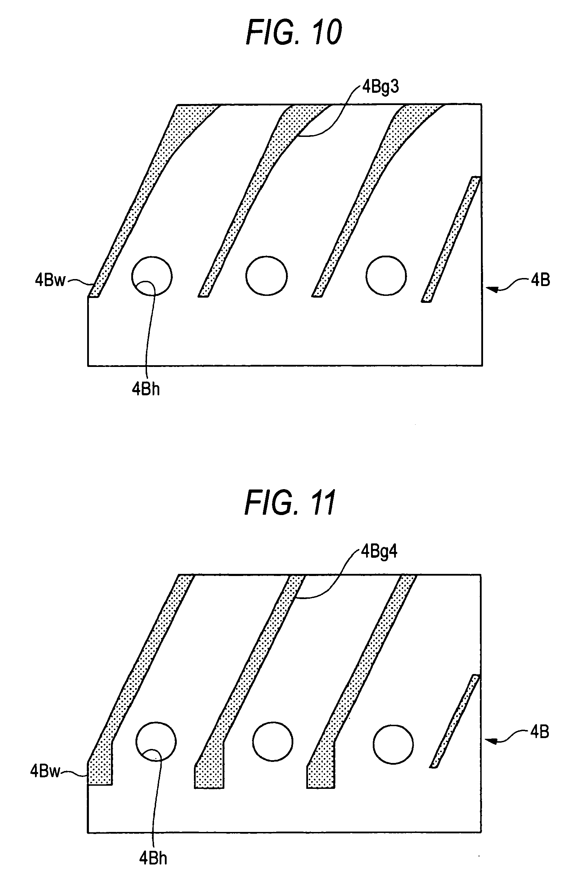

Referring to Figs. 1 to 11, explanations will be made into an embodiment of the electric power steering unit and the controller thereof of the present invention.

As shown in Fig. 1, this electric power steering unit includes: a steering wheel 2; a steering mechanism 3 interposed between a right and a left steered wheel DW, DW; and a controller (ECU) 4 for controlling a generation of a steering force from this steering mechanism 3.

The steering mechanism 3 includes: a steering shaft 11 connected to the steering wheel 2; an intermediate shaft 12; a reduction gear 13 interposed between the steering shaft 11 and the intermediate shaft 12; a gear 14 connected between the intermediate shaft 12 and steered wheels DW, DW; and a rack 15 connected between the intermediate shaft 12 and steered wheels DW, DW. An output shaft 16A of a three-phase AC electric motor 16, which is the electric motor described above, is also meshed with the reduction gear 13. The electric motor 16 is driven when it receives a command (a drive current) from the controller 4. When the electric motor 16 is driven in this way, an assisting steering force is given to the steering mechanism 3.

A steering force given to the steering wheel 2 is transmitted to the reduction gear 13 via the steering shaft 11. The reduction gear 13 includes a reduction mechanism not shown in the drawing. Therefore, although not shown in the drawing, the reduction gear 13 changes a rotational direction of the output from the output shaft 16A of the electric motor 16 into a direction perpendicular to the direction concerned, and while the reduction gear 13 is reducing a rotational speed of the output from the output shaft 16A of the electric motor 16, it generates an assisting torque. The thus generated assisting torque is added to the steering torque and transmitted to the intermediate shaft 12. Therefore, the assisting torque, which is based on the electric motor 16, is given to the steered wheels DW, DW. In this way, an assisting steering force can be given by the electric motor 16.

The controller 4 receives a signal from a torque sensor (not shown) for detecting a steering force. Further, the controller 4 receives pieces of information such as a steering angle and a vehicle running speed which express a state of a running vehicle. According to these pieces of information, a desired assisting force is calculated at a predetermined time, and a drive current for generating the rotational direction and the rotational torque corresponding to the assisting steering force is supplied to the electric motor 16. Due to the foregoing, a manual steering force of a driver, which is given to the steering wheel 2, is assisted in the viewpoint of torque. The thus assisted steering force is transmitted to the steered wheels DW, DW. In this way, a function of the electric power steering unit can be exhibited.

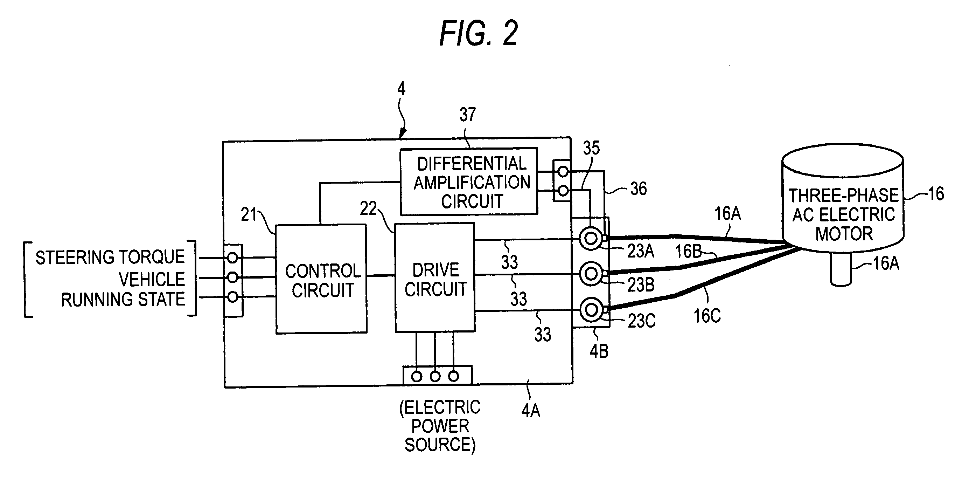

Fig. 2 is a view showing an outline of the function of the above controller 4 and also showing an electrical connection between the controller 4 and the three phase AC electric motor 16.

As shown in Fig. 2, the controller 4 includes: a control circuit 21 made up of a micro-computer (CPU); and a drive circuit 22 for generating a drive current corresponding to a control command calculated by this control circuit 21.

In the control circuit 21, pieces of information related to a steering torque and a running state of a vehicle are sent from various sensors not shown. Therefore, the control circuit 21 starts a program, which is previously stored, and processes the thus inputted information according to an algorithm for assisting a steering force given by the program. The result of the processing is sent to the drive circuit 22 at a predetermined time. This result of the processing is obtained as a duty ratio for switching an electric power source supplied to the drive circuit 22. Therefore, the drive circuit 22 generates a drive current for driving the electric motor 16 on the basis of the control conducted by the control circuit 21.

The controller 4 includes a board 4A on which the control circuit 21 and the drive circuit 22 are mounted. At one end portion of this board 4A, a terminal base 4B functioning as a connecting section with the electric motor 16 is fixed. On this terminal base 4B, three output terminals 23A to 23C, which are fastened by bolts, are formed. In this connection, the terminal base 4B and the internal circuit of the controller 4 may be connected to each other by either a harness, a circuit board or one conductive sheet made by means of press forming.

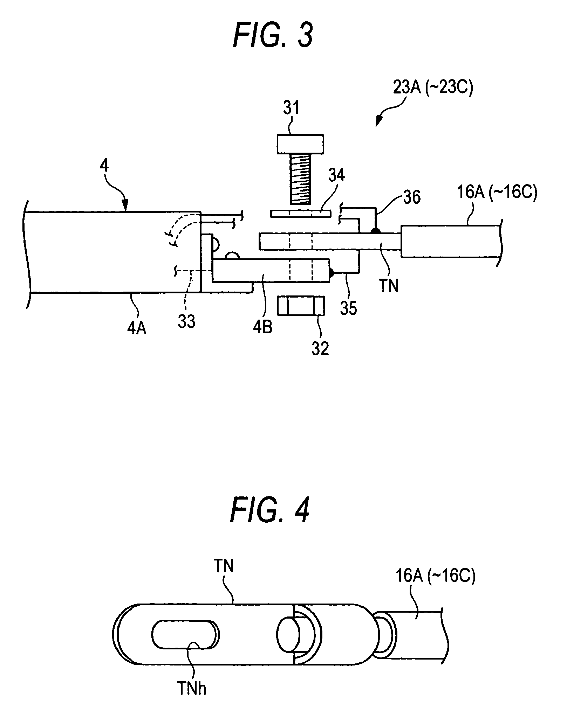

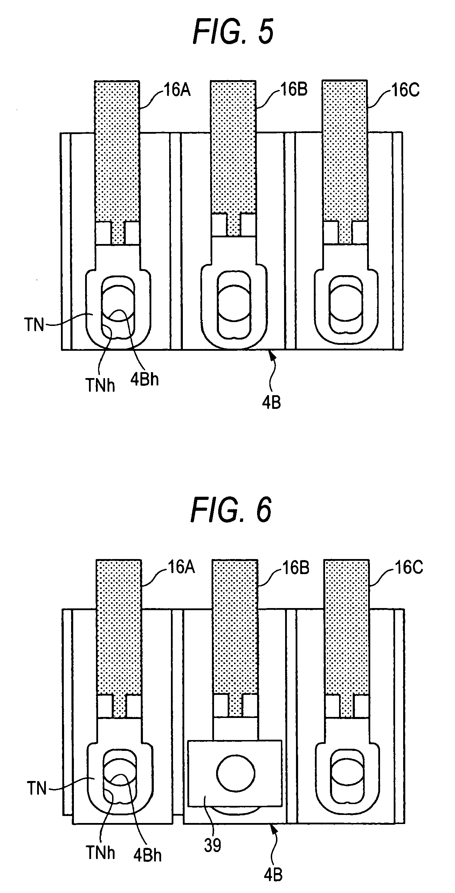

As shown in Fig. 3, each of the output terminals 23A to 23C can fasten a terminal, which is provided from the outside, with a bolt 31 and a nut 32. An electric wire 33, which is used for supplying an electric current from the drive circuit 22, is connected to each of the output terminals 23A to 23C. On the other hand, terminal TN of each of the three pieces of the harness 16A to 16C, which extend from the electric motor 16, can be fastened by the bolt 31 and the nut 32 via a washer 34. In each terminal TN of each of the three pieces of harness 16A to 16C, an elliptical hole TNh used for connection is formed as shown in Fig. 4. Due to this structure, even when the harness 16A to 16C is thick, it is possible to absorb the fluctuation and positively fasten the bolt. In this case, when a circular hole is formed instead of the elliptical hole TNh, a positional shift tends to be caused between this circular hole and the hole formed in the terminal base 4B. Accordingly, a worker is forced to conduct working with both hands, which requires a long working time. On the other hand, as shown in Fig. 5, in the case where the elliptical hole TNh is formed in the terminal TN, a positional shift is seldom caused the elliptical hole TNh and the hole 4Bh formed on the terminal base 4B. Accordingly, it is possible to absorb an attaching tolerance of attaching the harness 16A to 16C to the terminal base 4B. Therefore, it is possible for the worker to conduct working with one hand, and the working time can be reduced. As shown in Fig. 6, when the fittings 39 are fastened simultaneously when the terminal base 4B and the harness 16A to 16C are fastened to each other with bolts, the generation of a positional shift between the elliptical hole TNh and the hole 4Bh can be reduced. Further, the terminal base 4B and the harness 16A to 16C can be positively connected to each other.

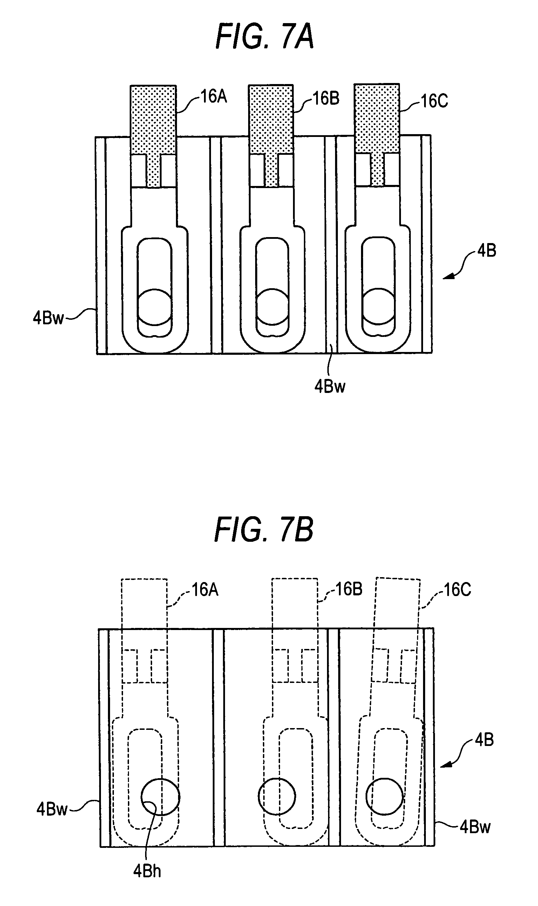

In the case where the pieces of harness 16A to 16C are attached to the terminal base 4B, since a gap is formed between each piece of harness 16A to 16C and the bulkhead 4Bw of the terminal base 4B as shown in Fig. 7A, there is a possibility that a positional shift is caused between the elliptical hole TNh of the terminal TN and the hole 4Bh of the terminal base 4B as shown in Fig. 7B.

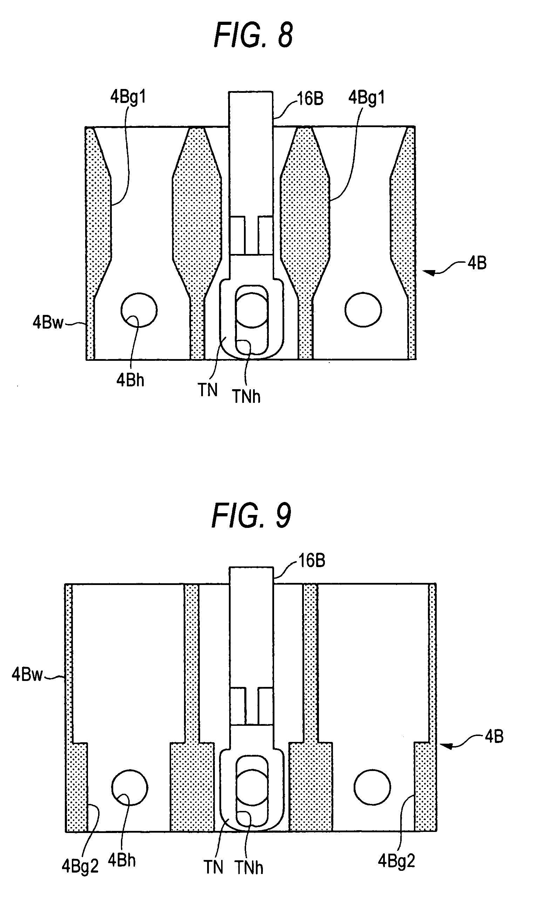

Therefore, in the present embodiment, positioning guides 4Bg1, 4Bg2, 4Bg3, 4Bg4 for regulating movements of the pieces of harness 16A to 16C are provided on the bulkheads 4Bw of the terminal base 4B as shown in Figs. 8 to 11. The positioning guides 4Bg1 regulate movements of the pieces of harness 16A to 16C in the width direction. Therefore, the pieces of harness 16A to 16C can be easily assembled to the terminal base 4B. The positioning guides 4Bg2 regulate movements of the terminals TN, which are fixed to the forward end portions of the pieces of harness 16A to 16C, in the width direction. Therefore, the pieces of harness 16A to 16C can be easily assembled to the terminal base 4B. The positioning guides 4Bg3, 4Bg4 respectively function as bulkheads and are obliquely formed on the terminal base 4B. Therefore, the positioning guides 4Bg3, 4Bg4 respectively regulate movements of the pieces of harness 16A to 16C in the width direction. Accordingly, the pieces of harness 16A to 16C can be easily assembled to the terminal base 4B. When the positioning guides 4Bgl to 4Bg4 are provided on the terminal base 4B, the worker can conduct working with one hand. Therefore, it is possible to reduce the working time.

Therefore, when three pieces of harness 16A to 16C are respectively fastened to the output terminals 23A to 23C with bolts, the electric motor 16 can be electrically connected to the drive circuit 22. Due to this structure, a drive current outputted from the drive circuit 22 is sent to the electric motor 16 and an assisting steering torque can be given to the steered wheels DW, DW as described before.

Concerning the connection structure described above, the present embodiment further includes a function of controlling a contact resistance in the output terminals 23A to 23C. An object of controlling the contact resistance is to positively prevent the occurrence of problems such as heating, melting, smoking and igniting. In order to realize the prevention of these problems, it is necessary to provide a mechanism for detecting the contact resistance.

This embodiment includes: lead wires 35, 36, the detecting end portions of which are electrically connected to core wire portions of the pieces of harness 16a to 16C and also connected to the output terminals 23A to 23C; and a differential amplification circuit 37 to which these lead wires 35, 36 are connected. As shown in Fig. 2, the differential amplification circuit 37 is mounted in the controller 4 and detects and amplifies a voltage difference between both the detection end portions, and the thus obtained difference signal is sent out to the control circuit 21. In this connection, Fig. 2 shows only the differential amplification circuit 37 which corresponds to only one output terminal 23A. However, it is preferable that the differential amplification circuits 37 are separately provided for all the output terminals 23A to 23C. Of course, depending upon a case, only one terminal may be provided with the differential amplification circuit 37 as shown in the drawing.

In the case where a difference signal, which is obtained by the differential amplification circuit 37, is going to give a predetermined threshold value, the control circuit 21, which receives a signal from the differential amplification circuit 37, controls the drive circuit 22 so that a restricting function for restricting a drive current to be supplied to the electric motor 16 can be obtained.

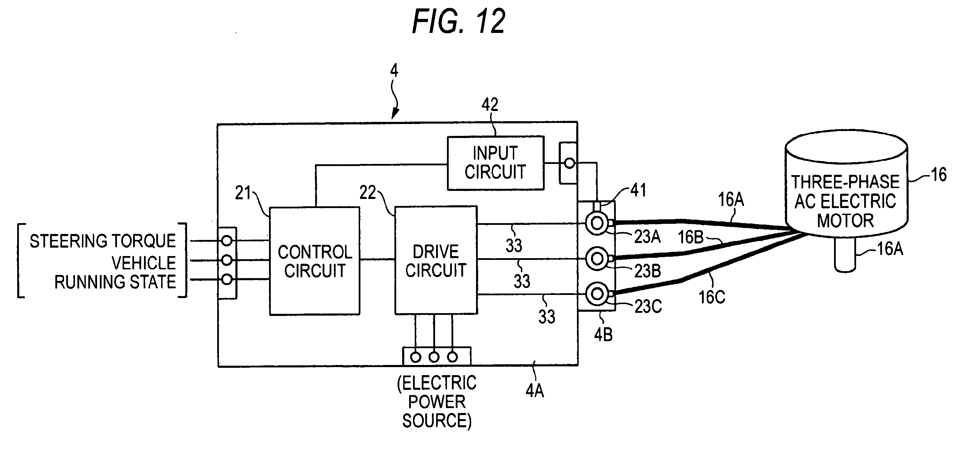

It is possible to employ various embodiments of restricting an electric current. As a variation shown in Fig. 12, the temperature detection member 41 such as a thermistor may be provided in all the output terminals 23A to 23C or in one portion of the output terminals 23A to 23C. The reason why the temperature detection member 41 is provided is that when a contact resistance between each output terminal 23A to 23C and each terminal TN of the harness 16a to 16C is increased, the increase is reflected in the temperature. Therefore, after a detection signal of the temperature detection member 41 has been sent out to the input circuit 42 and amplified, it is sent to the control circuit 21. Therefore, when the control circuit 21 compares the detection signal with a predetermined threshold value and the detection signal is higher than the threshold value, in the same manner as that described before, a restricting function of restricting the drive current sent to the electric motor 16 is exhibited. Due to the foregoing, an increase in the contact resistance of each output terminal 23A to 23C can be always watched in real time. When necessary, a predetermined countermeasure can be quickly and positively taken, for example, an intensity of the electric current can be restricted.

According to the electric power steering unit 1 of the present embodiment, in the case where the pieces of harness 16A to 16C of the electric motor 16 are connected to the terminal base 4B of the controller 4 by means of fastening bolts, the following various advantages can be provided.

First of all, the present invention provides an electric power steering unit in which an intensity of the drive current can be increased and further a heat deterioration can be suppressed. Especially when the weight of a vehicle is heavy, an intensity of the drive current supplied to the electric motor of the electric power steering unit must be increased and further a higher voltage must be impressed upon the electric power steering unit. In this case, according to the connecting method of the prior art in which the conventional connector is used, when a contact failure is caused in the engaging portion (the connecting portion) of the connector, heat deterioration tends to be caused by the contact resistance. Accordingly, there is a possibility that the durability of the connector is lowered. However, according to the electric power steering unit 1 of the present embodiment, the above problems of the prior art can be solved. That is, an increase in the contact resistance between the terminal base 4B and each terminal TN of each harness 16A to 16C can be detected and a drive current of the electric motor 16 can be controlled. Therefore, the heat deterioration caused by a contact failure can be positively reduced or suppressed and the reliability can be enhanced. Therefore, the present invention can positively cope with the case of a heavy vehicle in which it is necessary to supply a high intensity of current and further it is necessary to impress a higher voltage. Accordingly, the steering torque assisting function can be more positively and stably exhibited.

Of course, the aforementioned advantages can be provided to not only a heavy vehicle but also a light vehicle. When a contact resistance is controlled as described above, it is possible to prevent the occurrence of heating, melting, smoking and igniting of the connecting section (the terminal base 4B).

Since the connection is made by fastening bolts as described above, it is possible to change an engaging direction (a connecting direction) of each terminal TN of the harness 16A to 16C in a predetermined range. Accordingly, the electric power steering unit 1 can have a sufficient space for accommodating the electric motor 16 and further the electric power steering unit 1 can have a wide arrangement direction for arranging the electric motor 16. Further, it is possible to enhance a degree of freedom of designing a layout of the electric power steering unit 1. Therefore, the layout can be easily designed. Further, the other devices can be easily laid out.

Concerning this matter, the specific advantages are described as follows. The controller 4 and the electric motor 16 can be laid out close to each other, and lengths of the pieces of harness 16A to 16C can be shortened. According to this arrangement in which the components are arranged close to each other, radiation noise radiated from the pieces of harness 16A to 16C can be reduced.

In this connection, the present invention is not limited to the above specific embodiment. Variations can be made by those skilled in the art without departing the spirit and scope of the present invention.

## Claims

1. An electric power steering unit comprising:
an electric motor for driving an electric power steering unit of a vehicle;
a controller for controlling a drive of the electric motor; and
a bolt-fastening type connecting section arranged in the controller, constituting a signal terminal of the controller, wherein
a terminal of a harness extending from the electric motor is fastened to the connecting section by means of bolt-fastening.

2. The electric power steering unit according to claim 1, wherein
the terminal of the harness includes an elliptical hole terminal for bolt-fastening.

3. The electric power steering unit according to claim 1, further comprising:
a contact resistance detection member for detecting a contact resistance between the signal terminal of the controller and the terminal of the harness which are fastened to each other by the bolt-fastening structure of the connecting section; and
an electric current control member for controlling a drive current given to the electric motor by using detection information detected by the contact resistance detection member.

4. The electric power steering unit according to claim 1, wherein
the contact resistance detection member detects a contact resistance with information of a difference in voltage between both end portions of the connecting section or information of a temperature of the connecting section.

5. The electric power steering unit according to claim 1, further comprising:
a positioning guide for regulating a movement of a portion of the harness terminal formed in the signal terminal of the controller.

6. A controller for an electric power steering unit to control a drive of an electric motor which drives an electric power steering unit of a vehicle, comprising:
a terminal base provided integrally with the controller, having a connecting section of a bolt-fastening structure constituting a signal terminal of the controller, and
a terminal of the harness extending from the electric motor fastened to the connecting section by means of bolt-fastening.
